# EUROPÄISCHE PATENTANMELDUNG

(11) **EP 4 276 776 A1**
(43) Veröffentlichungstag der Anmeldung: **15.11.2023**
(21) Anmeldenummer: 22173212.6
(22) Anmeldetag: 13.05.2022
(51) Int. Cl.: G06V 20/64, G06V 10/80, G06V 10/44

(54) **VERFAHREN UND SYSTEME ZUM ERKENNEN ZUMINDEST EINES OBJEKTS IN EINER VORGEGEBENEN UMGEBUNG**

(71) Anmelder: Siemens Aktiengesellschaft, 80333 München (DE)
(72) Erfinder: Benkert, Johannes, 90763 Fürth (DE); Recktenwald, Alois, 91074 Herzogenaurach (DE); Vogel, Julian, 90766 Fürth (DE)
(74) Vertreter: Siemens Patent Attorneys

(57) **Zusammenfassung**

Die Erfindung betrifft ein Computergestütztes Verfahren zum Einstellen einer Sensoreinrichtung zum Erfassen einer zumindest ein Objekt (6a bis 6f, O1, O2, O3) umfassenden Umgebung (5), wobei die Sensoreinrichtung eine erste Sensorvorrichtung (3) und eine zweite, von der ersten Sensorvorrichtung (3) getrennt ausgebildete und beabstandete Sensorvorrichtung (4) umfasst, wobei
- der Umgebung (5) korrespondierende 3D-Daten, die mit der ersten Sensorvorrichtung (3) aufgenommen worden sind, und der Umgebung (5) korrespondierende Bilddaten, die mit der zweiten Sensorvorrichtung (4) aufgenommen worden sind, bereitgestellt werden, wobei die 3D-Daten in einem mit der ersten Sensorvorrichtung (3) assoziierten Koordinatensystem (LKS) vorliegen und die Bilddaten in einem weiteren, mit der zweiten Sensorvorrichtung (4) assoziierten Koordinatensystem (KKS) vorliegen,
- die 3D-Daten und die Bilddaten fusioniert werden, wobei sowohl aus den 3D-Daten als auch aus den Bilddaten Merkmale (9) des zumindest einen Objekts (6a bis 6f, O1, O2, O3) extrahiert werden und die aus den 3D-Daten extrahierten Merkmale (9) mit den aus den Bilddaten extrahierten Merkmalen (9) verknüpft werden, wodurch eine relative Lage zwischen dem Koordinatensystem (LKS) und dem weiteren Koordinatensystem (KKS) bestimmt wird.

## Beschreibung

Die Erfindung betrifft ein computergestütztes Verfahren zum Einstellen einer Sensoreinrichtung zum Erfassen einer zumindest ein Objekt umfassenden Umgebung, wobei die Sensoreinrichtung eine erste Sensorvorrichtung und eine zweite, von der ersten Sensorvorrichtung getrennt ausgebildete und beabstandete Sensorvorrichtung umfasst, bei welchem der Umgebung korrespondierende 3D-Daten, die mit der ersten Sensorvorrichtung aufgenommen worden sind, und der Umgebung korrespondierende Bilddaten, die mit der zweiten Sensorvorrichtung aufgenommen worden sind, bereitgestellt werden, wobei die 3D-Daten in einem Koordinatensystem vorliegen und die Bilddaten in einem weiteren, mit der zweiten Sensorvorrichtung assoziierten Koordinatensystem vorliegen. Dabei ist die relative Lage der beiden Koordinatensysteme a priori nicht bekannt. Das zumindest eine Objekt ist vorzugsweise ein 3D-Objekt. Die vorgegebene Umgebung ist vorzugsweise eine 3D-Umgebung.

Außerdem betrifft die Erfindung ein computergestütztes Verfahren zum Erfassen zumindest eines Objekts in einer Umgebung, wobei eine Sensoreinrichtung bereitgestellt wird, wobei die Sensoreinrichtung eine erste Sensorvorrichtung und eine zweite, von der ersten Sensorvorrichtung getrennt ausgebildete und beabstandete Sensorvorrichtung umfasst, der Umgebung korrespondierende 3D-Daten mit der ersten Sensorvorrichtung aufgenommen werden, wobei die 3D-Daten in einem mit der ersten Sensorvorrichtung assoziierten Koordinatensystem vorliegen, der Umgebung korrespondierende Bilddaten mit der zweiten Sensorvorrichtung aufgenommen werden, wobei die Bilddaten in einem weiteren, mit der zweiten Sensorvorrichtung assoziierten Koordinatensystem vorliegen, die Sensoreinrichtung gemäß dem vorgenannten Verfahren eingestellt wird.

Darüber hinaus betrifft die Erfindung ein Computerprogramm umfassend Befehle, die beim Ausführen des Computerprogramms durch einen Computer, diesen dazu veranlassen, das oben genannte Verfahren auszuführen, und ein computerlesbares Medium mit einem solchen Computerprogramm.

Die 3D-Daten können mit einer ersten Sensorvorrichtung aufgenommen bzw. erfasst werden. Die Bilddaten können mit einer zweiten Sensorvorrichtung aufgenommen bzw. erfasst werden.

Somit betrifft die Erfindung auch ein Sensorsystem zum Erfassen zumindest eines Objekts in einer Umgebung. Das Sensorsystem umfasst eine Sensoreinrichtung, die eine erste Sensorvorrichtung, eine zweite, von der ersten Sensorvorrichtung getrennt ausgebildete und beabstandete Sensorvorrichtung und eine Recheneinrichtung aufweist, wobei die erste und die zweite Sensorvorrichtung der Recheneinrichtung zugeordnet sind, wobei die erste Sensorvorrichtung dazu eingerichtet ist, die Umgebung abzutasten und dabei der Umgebung korrespondierenden 3D-Daten zu erfassen, wobei die 3D-Daten in einem mit der ersten Sensorvorrichtung assoziierten Koordinatensystem vorliegen, und die erfassten 3D-Daten an die Recheneinrichtung zu übermitteln, wobei die zweite Sensorvorrichtung dazu eingerichtet ist, zumindest der Umgebung korrespondierende Bilddaten aufzunehmen, wobei die Bilddaten in einem weiteren, mit der zweiten Sensorvorrichtung assoziierten Koordinatensystem vorliegen und die Bilddaten an die Recheneinrichtung zu übermitteln.

Außerdem betrifft die Erfindung ein System zum Greifen zumindest eines aufhebbaren Objekts in einer Umgebung, wobei das System das vorgenannte Sensorsystem und eine dem Sensorsystem zugeordnete Greifeinrichtung umfasst.

Darüber hinaus betrifft die Erfindung einen digitalen Zwilling zum Modellieren des Greifens des zumindest einen Objekts in der vorgegebenen Umgebung, wobei der digitale Zwilling ein digitalisiertes Abbild des vorgenannten Systems umfasst.

Im Bereich von Krananlagen in der Industrie (z.B. Stahlerzeugung) und Hafenbereich (z.B. Container Terminals) besteht ein ständiger Trend zum voll automatischen Betrieb des Kranes. Zur Erreichung eines voll automatischen Betriebes werden unterschiedliche Sensoriken wie Laser und Kameras eingesetzt. Die Sensorik dient überwiegend zur Bestimmung der Position zum Absetzten oder Aufnehmen einer Last. Zur Erkennung von Hindernissen oder Objekten im Arbeitsbereich der Last, bis hin zur Erkennung von Personen im Arbeitsbereich des Krans.

Die hierbei eingesetzte Sensorik, wie Laser und Kameras haben Vor- und Nachteile. Zum Beispiel erreicht man mit einem Laser-System eine hohe Tiefengenauigkeit bei der Positionsbestimmung, benötigt aber bei der Bestimmung der Position einen hohen Zeitaufwand, der den Ablauf der Automatisierung mit zusätzlichen Leerlaufzeiten beaufschlagt. Verwendet man ein Kamerasystem so kann man mit einer hohen Frequenz Objekte erkennen, wie zum Beispiel durch den Einsatz von maschinellen Lernalgorithmen, erreicht aber nicht die benötigte Genauigkeit bei der Positionsbestimmung.

Um eine performante und genaue Erkennung von Objekten und Positionen zu erreichen, benötigte man ein Verfahren, um die Vorteile beider Sensoriken zu vereinen.

Derzeit gibt es Kamera und Laser basierte Systeme zur Detektion von Objekten und Positionsbestimmungen. Im Bereich der Krananlagen werden Laser verwendet, die Tiefeninformationen auf Distanzen bis zu 150 - 200 Metern liefern können. Diese werden Stand heute getrennt voneinander betrieben und ausgewertet.

Hierbei wird bei Laserbasierten Systemen ein 3D Bereich mit Lasern abgetastet und aus der repräsentierenden Wolke von Messpunkten mit Hilfe von zum Beispiel virtuellen Prüfkörpern Positionen erkannt und Objekte bestimmt. Dabei können solche Verfahren sehr aufwendig sein, da die exakte Lage des gesuchten Objekts unbekannt ist. Dementsprechend muss ein großer Bereich hochgenau abgetastet werden, wobei für die exakte Lagebestimmung nur ein kleiner Teilbereich relevant ist.

Zudem können bestimmte Informationen (auf große Distanzen) lediglich in einem der beiden Sensoren erfasst werden. Die Kamera liefert Farbinformationen, das Laser-System - Tiefeninformationen.

Bei kamerabasierten Systemen werden die Bildinformationen auf ein Auswertesystem gebracht, welches die Bilder digital oder analog einliest und verarbeitet. Bei der Verarbeitung werden zum Beispiel neuronale Netze verwendet, um bestimmte Objekte im Bild zu finden. Dies kann sehr performant geschehen. Die für viele Probleme im Bereich des automatisierten Containerhandlings benötigte Tiefeninformation, ist hierbei nicht zuverlässig verfügbar.

Die der vorliegenden Erfindung zugrunde liegende Aufgabe besteht darin, die Erkennung der 3D-Objekte und Bestimmung ihre Koordinaten im 3D-Raum zu verbessern.

Die Aufgabe wird durch das eingangs genannte Verfahren dadurch gelöst, dass die 3D-Daten und die Bilddaten (automatisch und insbesondere vollautomatisch) fusioniert werden, wobei sowohl aus den 3D-Daten als auch aus den Bilddaten Merkmale, insbesondere Kanten und/oder Ecken, des zumindest einen Objekts, beispielsweise eines Containers oder eines Bauteils, extrahiert werden und die aus den 3D-Daten extrahierten Merkmale, insbesondere die Kanten und/oder die Ecken, mit den aus den Bilddaten extrahierten Merkmalen, insbesondere mit den Kanten und/oder mit den Ecken, verknüpft werden, wodurch eine relative Lage zwischen dem Koordinatensystem und dem weiteren Koordinatensystem bestimmt wird.

Bei einer Ausführungsform kann es vorgesehen sein, dass die 3D-Daten in Form von 3D Punktwolke vorliegen und mit einer Laser-, Radar-, oder Ultraschallscanvorrichtung aufgenommen worden sind. Eine solche Laserscanvorrichtung kann beispielsweise unbewegbar befestigt sein, z.B. an einem Kran. D.h. das auf eine solche starre Sensorvorrichtung bezogene (erste) Koordinatensystem bewegt sich während der Messung nicht.

Dabei wird unter "die 3D-Daten und die Bilddaten fusionieren" eine gleichzeitige Datenverarbeitung der 3D-Daten und der Bilddaten verstanden, bei der zumindest eine (Datenverarbeitungs-)Operation Informationen aus den 3D-Daten und aus den Bilddaten in Verbindung bringt und dabei Zusammenhänge erschließt, die unmittelbar für weitere Datenverarbeitungsschritte verwendet werden können.

Das Fusionieren der Daten ermöglicht eine Berücksichtigung der in 3D-Daten enthaltenen Tiefeninformationen bei der Objekterkennung. Hierdurch werden eine bessere Performance, Genauigkeit und Zuverlässigkeit bei Erkennung von Objekten und Positionen erreicht.

Bei einer Ausführungsform kann es vorgesehen sein, dass die Bilddaten Informationen umfassen, die in 3D-Daten nicht enthalten sind, beispielsweise Farbinformationen, Bezeichnung des Objekts usw.

Unter dem Begriff "der vorgegebenen Umgebung korrespondierenden 3D-Daten" werden die 3D-Daten verstanden, die mittels einer dafür geeigneten Sensorvorrichtung aufgenommen wurden, die die vorgegebene Umgebung abtastet bzw. scannt.

Unter dem Begriff "der vorgegebenen Umgebung korrespondierenden Bilddaten" werden Bilddaten, beispielsweise 2D-Bilddaten, verstanden, die mittels einer dafür geeigneten Sensorvorrichtung aufgenommen wurden, die die vorgegebene Umgebung aufnimmt.

Unter dem Begriff "Umgebung" ist im Rahmen der vorliegenden Offenbarung eine Gesamtheit dessen zu verstehen, was die Sensoreinrichtung umgibt. Die Umgebung kann insbesondere als ein Raum, beispielsweise als eine Lagerhalle, ein (Teil des) Be- und Entladungsbereichs eines Hafens (eines Containerterminals), ein Bereich einer Fertigungsstraße, oder auch ein Behälter für Bauteile oder als ein Bereich einer öffentlichen Straße ausgebildet sein.

Unter dem Begriff "Objekt" ist im Rahmen der vorliegenden Offenbarung ein beispielsweise Gegenstand zu verstehen, welcher ein Teil der Umgebung ist. Dies kann beispielsweise ein Container (ein Großraumbehälter, z.B. ein 40-Fuß-Container), ein Bauteil, z.B. ein Karosserieteil, oder auch eine, z.B. einen Raum begrenzende Wand, eine Tür usw. sein.

Bei einer Ausführungsform kann es vorgesehen sein, dass die Kanten als Geraden ausgebildet oder gekrümmt sind.

Bei einer Ausführungsform kann es vorgesehen sein, dass die zweite Sensorvorrichtung beweglich ist. Somit kann sich die *a priori* nicht bekannte relative Lage zwischen der ersten und der zweiten Sensorvorrichtung und somit zwischen den entsprechenden Koordinatensystemen.

Bei einer Ausführungsform kann es vorgesehen sein, dass beim Fusionieren in den 3D-Daten zumindest eine Hüllkurve des zumindest einen Objekts berechnet wird. Dabei können beispielsweise für jeden (Mess)Punkt aus den 3D-Daten die k nächsten Nachbarpunkte bestimmt werden. Dabei kann z. B. ein sogenannter k-Nearest-Neighbor-Algorithmus verwendet werden. Anschließend können ausgewählte Punkte - x, y, z z.B. in dem ersten Koordinatensystem - als Matrix notiert werden, von der eine Eigenwert-Analyse durchgeführt werden kann (engl.: Principal Component Analysis). Dabei zeigt der kleinste Eigenvektor in die Richtung der Flächen-Normale (engl.: Plane-PCA). Für jeden Punkt der Punktwolke kann somit eine Flächennormale nᵢ bestimmt werden. Die berechneten Normalen-Richtungen können anschließend über einen Filter geglättet werden. Der Messstrahl-Vektor lᵢ jedes Punktes kann zusätzlich für den nächsten Verarbeitungsschritt verwendet werden. Dabei kann für jedes Vektor-Paar lᵢ und nᵢ anschließend das Skalarprodukt berechnet werden. Abhängig davon, ob das Skalarprodukt negativ ist, kann die Richtung der Flächennormale geflippt (nᵢ* -1) werden. Dies beruht auf der Annahme, dass alle Objekte in der vorgegebenen Umgebung auf der Außenseite von der ersten Sensorvorrichtung, beispielsweise von einem Laservorrichtung abgetastet wurden. Hierdurch kann mathematische Stabilität des Verfahrens erhöht werden. Als Ergebnis der vorgenannten Teilschritte ergibt sich ein Vektorfeld. Basierend auf diesem Vektorfeld kann eine Fläche gleichen Potentials bestimmt werden. Dies kann beispielsweise mithilfe der Poisson-Gleichung erfolgen. Diese Fläche bildet eine umhüllende Fläche - die Hüllkurve - des zumindest einen Objekts und verläuft durch alle Messpunkte.

Bei einer Ausführungsform kann es vorgesehen sein, dass ein Krümmungsfeld für die Hüllkurve berechnet wird. Zu diesem Zweck kann beispielsweise mit Hilfe unterschiedlicher zwei- und dreidimensionaler Gauß-Filter eine Kurven- bzw. Netzkrümmung bestimmt werden. Dabei entsprechen Stellen großer Krümmung typischerweise Kanten und/oder Ecken.

Bei einer Ausführungsform kann es vorgesehen sein, dass maximale Krümmungen der Hüllkurve abgebildet werden. Dabei kann das errechnete Krümmungsfeld des Netzes bzw. der Hüllkurve abgebildet werden. Vorzugsweise werden in dieser Abbildung nur Bereiche starker negativer oder positiver Krümmung berücksichtigt. Hierbei handelt es sich beispielsweise um die Kanten und/oder Ecken des Objekts bzw. der Objekte.

Basierend auf der Abbildung der maximalen Krümmungen können somit Kanten des zumindest eines Objekts erkannt bzw. bestimmt werden.

Bei einer Ausführungsform kann es vorgesehen sein, dass die Bilddaten mit einer digitalen Kamera aufgenommenen Bilder, Bild- und/oder Videosequenzen umfassen. Die Bilddaten sind vorzugsweise 2D-Bilddaten. Die Bilddaten können also dadurch entstehen, dass über eine oder mehrere Kameras Bilder, Bild- und/oder Videosequenzen aufgenommen werden.

Es versteht sich, dass das Sichtfeld der ersten Sensorvorrichtung mit dem Sichtfeld der zweiten Sensorvorrichtung im Wesentlichen übereinstimmt, so dass es von den einander korrespondierenden Objekten in den 3D-Daten und in den Bilddaten die Rede sein kann. Mit anderen Worten wird das zumindest eine Objekt, vorzugsweise jedes Objekt, das sich in der Umgebung befindet, sowohl mittels der ersten Sensorvorrichtung als auch mittels der zweiten Sensorvorrichtung erfasst.

Somit können die gleichen Objekte in den 3D-Daten und in den Bilddaten grundsätzlich unterschiedliche Koordinaten haben. Durch das hier offenbarte Verfahren zum Einstellen der Sensoreinrichtung ist es nicht mehr notwendig, die Ausrichtung der ersten Sensorvorrichtung auf die Ausrichtung der zweiten Sensorvorrichtung abzustimmen, weil durch die oben genannte Verknüpfung der Merkmale aus den 3D-Daten und den Bilddaten die relative Lage zwischen dem mit den 3D-Daten assoziierten Koordinatensystem und dem mit den Bilddaten assoziierten weiteren Koordinatensystem ermittelt wird, wodurch die Position bzw. die Koordinaten des zumindest einen Objekts in wenigstens einem der beiden Koordinatensysteme, vorzugsweise in beiden Koordinatensystemen stets bekannt ist.

Bei einer Ausführungsform kann es vorgesehen sein, dass die Merkmalsextraktion (z.B. Kanten- und/oder Eckendetektion) in den erfassten Bilddaten mittels des Canny-Algorithmus erfolgt. Dabei können beispielsweise Sobel- bzw. Canny-Filter verwendet werden. Hierdurch werden die Ecken und Kanten in den Aufnahmen extrahiert.

Bei einer Ausführungsform kann es vorgesehen sein, dass die aus den 3D-Daten extrahierten Kanten mit den aus den Bilddaten extrahierten Kanten wie folgt in Übereinstimmung gebracht (gematcht bzw. gepaart) werden. Zunächst kann sowohl in einem Kamera-Kanten-Bild, welches als Ergebnis der Bilddatenverarbeitung entsteht, als auch in der Projektion des Krümmungsnetzes, welche sich als Ergebnis der Verarbeitung der 3D-Daten ergibt, ein Histogram of (oriented) Gradients (HOG) erzeugt werden. Anschließend können die einzelnen Histogramme (jeweils aus den 3D-Daten und aus den Bilddaten) verglichen und die den entsprechenden Kanten und/oder Ecken gehörenden Punkte aus den 3D-Daten und aus den Bilddaten paarweise miteinander verbunden werden. Dabei können die bei der Verarbeitung der 3D-Daten berechneten Hüllkurven derart transformiert werden, beispielsweise durch Drehung, Translation, Skalierung und Abbildung über Kamera-Intrinsik (z.B. Brennweite, die Eigenschaften der Linse), dass die detektierten Kanten in den Hüllkurven bestmöglich zu den in den Kamerabildern erkannten Kanten passen. Um unterschiedlicher Skalierung der 3D-Daten und der Bilddaten, die beispielsweise unterschiedlich große Kanten in den 3D- und in den Daten bedingen kann, Rechnung zu tragen, kann ein skalierungsinvariantes Merkmals-Mapping verwendet werden. Beispielsweise kann dabei eine Scale-Invariant-Feature-Transform (SIFT), ein Speeded-Up-Robust-Features-Verfahren (SURF) oder ein Verfahren aus dem Bereich des maschinellen Lernens verwendet werden. Über einen Optimierungsterm kann die bestmögliche Abbildungsmatrix zwischen allen gefundenen Punkt-Paaren (der zu verknüpfenden Merkmale der 3D- und der Bilddaten) bestimmt werden. Die Abbildungs- matrix ist vorzugsweise eine Matrix aus der Klasse der Rigid-Transforms, die aus der Robotik bekannt sind. Dabei können falsch detektierte Verbindungspaare gefiltert werden. Als Ergebnis erhält man Punkt-Paare und deren Position in den 3D-Daten (im Koordinatensystem) und in den Bilddaten (im weiteren Koordinatensystem). Dadurch wird die relative Lage dieser zwei Koordinatensysteme (automatisch insbesondere vollautomatisch) festgelegt.

Nachdem die Merkmale, beispielsweise Kanten und/oder Ecken, des zumindest einen Objekts in den 3D-Daten und in den Bilddaten gepaart bzw. fusioniert wurden und somit die relative Lage (Verhältnis) der beiden Koordinatensysteme (der beiden Sensorvorrichtungen) bestimmt, können nun Informationen aus dem Koordinatensystem (3D-Daten) in das weitere Koordinatensystem (Bilddaten) und *vica versa* transformiert werden. Dadurch ist beispielsweise eine zudem in den Bilddaten detektierten Objekt gehörende räumliche Lage aus den 3D-Daten bekannt. Umgekehrt ist eine zu dem in den 3D-Daten detektierten Objekt gehörende Farbinformation aus den Bilddaten bekannt.

Dieses Beispiel zeigt den allgemeinen Vorteil, dass die Informationen über das zumindest eine Objekt aus den 3D-Daten die Informationen über dieses Objekt in den Bilddaten vervollständigen können und umgekehrt.

Die Aufgabe wird außerdem mit dem eingangs genannten computergestützten Verfahren zum Erfassen zumindest eines Objekts in einer Umgebung gelöst, wobei die Sensoreinrichtung nach einem vorgenannten Verfahren eingestellt wird, und anschließend die 3D-Daten und die Bilddaten derart verarbeitet werden, dass das zumindest eine Objekt erfasst (in den fusionierten Daten erkannt) wird und seine Position in zumindest einem der beiden Koordinatensysteme bestimmt wird.

Bei einer Ausführungsform kann es vorgesehen sein, dass zumindest ein Teil des erfassten Objektes in Form einer 3D-Punktwolke repräsentiert wird. Es versteht sich, dass es sich dabei um jenen Teil des Objektes handelt, der sowohl von der ersten als auch von der zweiten Sensorvorrichtung aus sichtbar ist.

Da das Verhältnis zwischen den Koordinatensystemen bekannt / ermittelt worden ist, kann die 3D-Punktwolke in einem der beiden Koordinatensysteme dargestellt werden.

Bei dem Verfahren zum Erfassen zumindest eines Objekts handelt es sich vorzugsweise um das Erfassen von Objekten, die von Interesse sind, z.B. beweglich sind und getragen bzw. verladen werden können, insbesondere handelt es sich um keine Türen oder Wände. Bei dem Verfahren zum Einstellen der Sensoreinrichtung können allerdings auch solche unbeweglichen Objekte wie Türen oder Wände als Referenzobjekte zum Fusionieren der Daten (s.o.) verwendet werden.

Bei einer Ausführungsform kann es vorgesehen sein, dass zunächst die Bilddaten aufgenommen werden, wobei anhand der Bilddaten ein Bereich der Umgebung ausgewählt bzw. festgelegt wird, wobei der Bereich kleiner als die Umgebung ist und das zumindest ein Objekt enthält, vorzugsweise begrenzend enthält, wobei die 3D-Daten ausschließlich in dem Bereich aufgenommen werden.

Dadurch kann das zumindest eine Objekt in der Umgebung schnell detektiert werden (in den Bilddaten), wobei die genauen Positionsbestimmungen aus den 3D-Daten entnommen werden. Dadurch ergibt sich ein Zeitgewinn bei der Repräsentation des zumindest einen Objekts in Form einer 3D-Punktwolke.

Besonders im Hinblick auf die Automatisierung hat dies große Vorteile. Bei Anwendungen, bei welchen das zumindest eine Objekt gegriffen werden soll, z.B. bei Krananlagen oder bei Robotern, ermöglicht die die Darstellung des zu greifenden Objekts als 3D-Punktwolke ein genaueres und zuverlässigeres Greifen dieses Objekts. In diesem Fall kann es zweckdienlich sein, das Koordinatensystem, in dem das Objekt als 3D-Punktwolke repräsentiert wird, als jenes Koordinatensystem zu definieren bzw. vorzugeben, welches von einer Steuereinrichtung des Krans bzw. des Roboters genutzt wird.

Bei einer Ausführungsform kann es vorgesehen sein, dass die erste Sensorvorrichtung einen oder mehrere 3D-LiDAR-Sensoren (LiDAR für engl. Light detection and ranging) umfasst, die die vorgegebene Umgebung abtasten, um 3D-Daten in Form von 3D-Punktwolken zu erzeugen. Dabei kann es zweckdienlich sein, die entstandenen Punktwolken zu registrieren und in das mit dem ersten Sensorvorrichtung assoziierten (auf die erste Sensorvorrichtung bezogenen) Koordinatensystem zu bringen (zu transformieren) bzw. in diesem Koordinatensystem darzustellen. Somit stellen die 3D-Daten eine Vielzahl von einzelnen von der ersten Sensorvorrichtung erfassten Punkten in dem 3D-Koordinatensystem dar.

Bei einer Ausführungsform kann es vorgesehen sein, dass die zweite Sensorvorrichtung zumindest eine Kamera, vorzugsweise eine Digitalkamera umfasst. Die Kamera(s) kann(können) beispielsweise an einem Roboter oder an einem Kran montiert werden, insbesondere an einem sich bewegenden Teil des Roboters bzw. des Krans.

Die Aufgabe wird außerdem mit der eingangs genannten Sensorsystem erfindungsgemäß dadurch gelöst, dass die Recheneinrichtung dazu eingerichtet bzw. konfiguriert ist, das vorgenannte Verfahren zum Einstellen der Sensoreinrichtung auszuführen, um die Sensoreinrichtung einzustellen, und anschließend die 3D-Daten und die Bilddaten derart zu verarbeiten, dass das zumindest eine Objekt (in den fusionierten Daten) erfasst (bzw. erkannt) und seine Position in zumindest einem der beiden Koordinatensysteme bestimmt wird.

Bei einer Ausführungsform kann es vorgesehen sein, dass die Recheneinrichtung dazu konfiguriert ist, zumindest ein (sowohl von der ersten als auch von der zweiten Sensorvorrichtung aus sichtbarer) Teil des Objektes in Form einer 3D-Punktwolke zu repräsentieren und vorzugsweise zu visualisieren.

Die erste Sensorvorrichtung ist von der zweiten Sensorvorrichtung baulich getrennt und beabstandet. Dabei können die erste Sensorvorrichtung und die zweite Sensorvorrichtung beispielsweise auf einem gemeinsamen Träger, insbesondere auf einer gemeinsamen Montageplatte montiert sein.

Bei einer Ausführungsform kann es vorgesehen sein, dass die erste Sensorvorrichtung als eine, vorzugsweise als eine Baueinheit ausgebildete Lasersensorvorrichtung ausgebildet ist.

Bei einer Ausführungsform kann es vorgesehen sein, dass die zweite Sensorvorrichtung eine Kamera, vorzugsweise eine Digitalkamera umfasst.

Bei einer Ausführungsform kann es vorgesehen sein, dass die Recheneinrichtung eine Anzeigeeinrichtung umfasst, die dazu eingerichtet ist, die 3D-Punktwolke zu visualisieren.

Darüber hinaus wird die Aufgabe mit einem eingangs genannten System zum Greifen zumindest eines aufhebbaren Objekts in einer Umgebung erfindungsgemäß dadurch gelöst, dass das Sensorsystem dazu eingerichtet ist, auf die Position des zumindest einen aufhebbaren Objekts in zumindest einem der beiden Koordinatensysteme bezogene Daten der Greifeinrichtung bereitzustellen, wobei die Greifeinrichtung dazu eingerichtet ist, aus den Daten Steuerbefehle abzuleiten und basierend auf den Steuerbefehlen eine Bewegung auszuführen, bei der das zumindest eine aufhebbare Objekt gegriffen wird. Das Objekt kann beispielsweise als eine zu greifende Last ausgebildet sein.

Nach dem Greifen kann das Objekt aufgenommen, (z.B. zu einer anderen Stelle) getragen und wieder abgesetzt werden.

Obendrein wird die Aufgabe mit einem digitalen Zwilling zum Modellieren des Greifens des zumindest einen aufhebbaren Objekts in der vorgegebenen Umgebung, das ein digitalisiertes Abbild des vorgenannten Systems umfasst.

In dem Kontext der vorliegenden Offenbarung wird unter dem Begriff "digitaler Zwilling" ein auf einer Recheneinrichtung, beispielsweise auf einem Computer ausführbares Computerprogramm verstanden, dass zum Modellieren und/oder zum Simulieren und - im Allgemeinen - zum Nachbilden des physikalischen Verhaltens des oben genannten Systems konfiguriert ist. Insofern stellt ein digitaler Zwilling ein exaktes digitalisiertes Abbild des Systems dar. Ein solches Computerprogramm weist typischerweise Benutzerschnittstellen auf und interagiert beim Ausführen mit einem Benutzer. Dabei kann der Benutzer bestimmte Befehle eingeben, wodurch bestimmte Abläufe des Systems simuliert und vorzugsweise auf einer Anzeigevorrichtung visualisiert werden, so dass der Benutzer die Ergebnisse der Simulation sehen kann. Ein solcher digitaler Zwilling ist vorzugsweise unmittelbar an das System angebunden, das er simuliert, um beispielsweise kritische bzw. unerwünschte Abläufe durch eine vorausschauende Simulation zu vermeiden.

Bei einer Ausführungsform kann es vorgesehen sein, dass der digitale Zwilling eine Schnittstelle aufweist, über die bei der Modellierung ausgeführte Steuerbefehle unmittelbar an die Greifeinrichtung des Systems übermittelbar sind.

Die Erfindung samt weiteren Vorteilen ist im Folgenden anhand beispielhafter Ausführungsformen näher erläutert, die in der Zeichnung veranschaulicht sind. In dieser zeigt
- FIG 1: ein Ablaufdiagramm eines computerimplementierten Verfahrens,
- FIG 2: eine Bestimmung einer relativen Lage zwischen zwei Koordinatensystemen,
- FIG 3: eine Repräsentation von Objekten in Form von 3D-Punktwolken, und
- FIG 4: ein System zum Greifen zumindest eines Objekts in einer vorgegebenen Umgebung.

In den Ausführungsbeispielen und Figuren können gleiche oder gleich wirkende Elemente jeweils mit den gleichen Bezugszeichen versehen sein. Die Bezugszeichen, insbesondere in den Ansprüchen, sind lediglich zur Vereinfachung der Findung der mit den Bezugszeichen versehenen Elemente vorgesehen und haben keine einschränkende Wirkung auf den unter den Schutz gestellten Gegenstand inne.

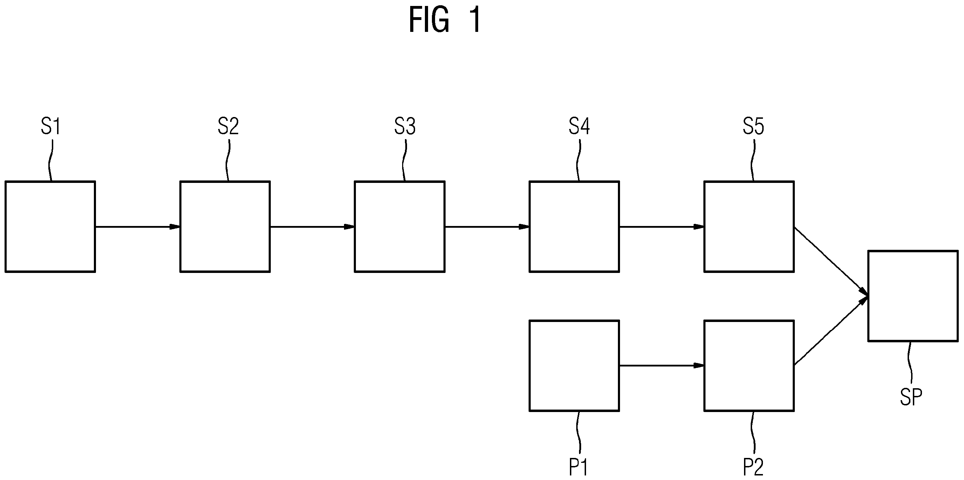

Zunächst wird auf FIG 1, FIG 2 und FIG 4 Bezug genommen. Diese zeigt ein Ablaufdiagramm eines computerimplementierten Verfahrens, das dem erfindungsgemäßen Verfahren entspricht.

FIG 1 lässt erkennen, dass das gezeigte Verfahren zwei parallel ablaufende Schrittsequenzen aufweist, die in einen für beide Schrittsequenzen gemeinsamen Verfahrensschritt einmünden.

Die von Unterkante der FIG 1 gesehen obere Schrittfrequenz umfasst sechs Schritte: S1 bis S5.

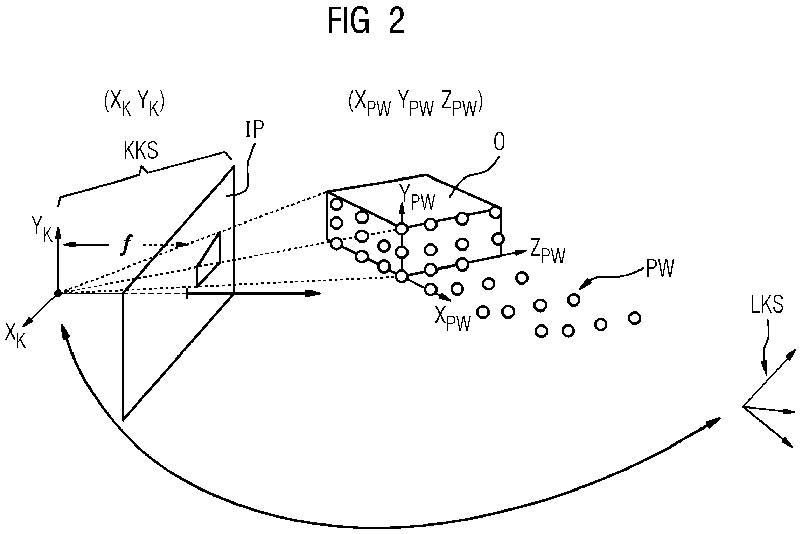

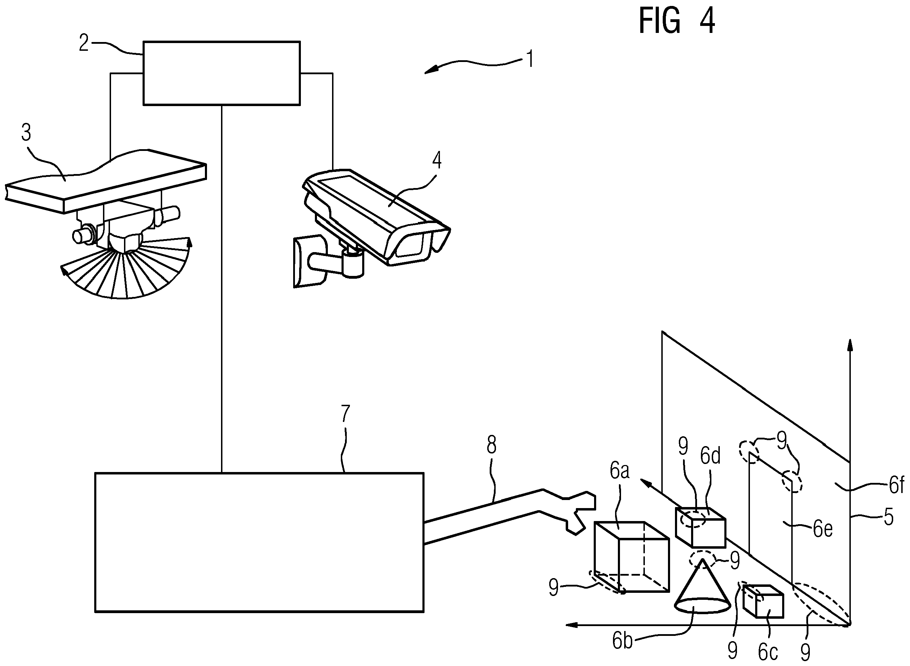

In einem Schritt S1 tastet eine Laservorrichtung 3 (s. FIG 4), die einen oder mehrere 3D-LiDAR-Sensoren umfasst, eine vorgegebene Umgebung 5, die sich im Sichtfeld der Laservorrichtung 3 befindet, ab. Dabei entsteht ein Datensatz aus 3D-Daten, die die mit der Laservorrichtung 3 erfassten Punkte - 3D-Punktwolke PW in FIG 2 - und ihre Koordinaten in einem ersten, auf die Laservorrichtung bezogenen 3D-Koordinatensystem LKS in FIG 2 umfassen.

Die Laservorrichtung 3 kann beispielsweise an einem Kran (hier nicht gezeigt) befestigt sein und somit in der Umgebung 5 fix angeordnet sein - die Laservorrichtung kann vorzugsweise nicht bewegt werden.

In einem Schritt S2 wird für die 3D-Punktwolke PW eine Hüllkurve (der ganzen vorgegebenen Umgebung) berechnet. Diese Hüllkurve umfasst vorzugsweise alle im Sichtfeld der Laservorrichtung 3 befindlichen Objekte. Zwecks Berechnung der Hüllkurve können beispielsweise für jeden (Mess)Punkt (X_{PW}, Y_{PW}, Z_{PW}) aus den 3D-Daten PW die k nächsten Nachbarpunkte bestimmt werden. Dabei kann z. B. ein sogenannter k-Nearest-Neighbor-Algorithmus verwendet werden. Anschließend können ausgewählte Punkte - X_{PW}, Y_{PW}, Z_{PW} (in dem 3D-Koordinatensystem LKS) - als Matrix notiert werden, von der eine Eigenwert-Analyse durchgeführt werden kann. Der kleinste Eigenvektor zeigt in die Richtung der Normale zu der Fläche, die die Hüllkurve bildet. Für jeden Punkt der Punktwolke PW kann somit eine Flächennormale nᵢ - also einer Flächennormale zu der Hüllkurve - bestimmt werden. Die berechneten Normalen-Richtungen können anschließend über einen Filter geglättet werden. Der Messstrahl-Vektor lᵢ jeden Punktes kann zusätzlich für den nächsten Verarbeitungsschritt verwendet werden. Dabei kann für jedes Vektor-Paar lᵢ und nᵢ anschließend das Skalarprodukt berechnet werden. Abhängig davon, ob das Skalarprodukt negativ ist, kann die Richtung der Flächennormale geflippt (nᵢ* -1) werden. Dies beruht auf der Annahme, dass alle Objekte O, 6a bis 6d, O1, O2, O3 in der vorgegebenen Umgebung 5 auf der Außenseite von der Laservorrichtung 3 abgetastet wurden. Hierdurch kann mathematische Stabilität des Verfahrens erhöht werden. Als Ergebnis der vorgenannten Teilschritte ergibt sich ein Vektorfeld. Basierend auf diesem Vektorfeld kann eine Fläche gleichen Potentials bestimmt werden. Dies kann beispielsweise mithilfe der Poisson-Gleichung erfolgen. Diese Fläche umhüllt die durch die Laservorrichtung 3 detektierten Punkte PW. Alle detektierten Punkte liegen auf dieser Hüllkurve (auf dieser umhüllenden Fläche).

In einem Schritt S3 wird eine Krümmungsanalyse der in Schritt S2 gebildeten Hüllkurve der Umgebung 5 durchgeführt. Dabei wird ein Krümmungsfeld berechnet. Dies kann beispielsweise mit Hilfe unterschiedlicher zwei- und dreidimensionaler Gauß-Filter eine Netzkrümmung bestimmt werden. Dabei entsprechen Stellen großer Krümmung typischerweise Kanten und/oder Ecken 9 der in der Umgebung 5 befindlichen Objekte O, 6a bis 6d, O1, O2, O3.

In einem Schritt S4 wird Abbildung maximale Krümmungen vorgenommen. Dabei kann das im Schritt S3 berechnete Krümmungsfeld abgebildet werden. Dabei werden vorzugsweise nur Bereiche starker negativer oder positiver Krümmung berücksichtigt, die typischerweise Kanten und/oder Ecken 9 der in der Umgebung 5 befindlichen Objekte O, 6a bis 6d, O1, O2, O3 entsprechen.

In einem Schritt S5 werden basierend auf der Abbildung der maximalen Krümmungen Kanten und/oder Ecken 9 der in der vorgegebenen Umgebung 5 befindlichen Objekte O, 6a bis 6d, O1, O2, O3 erkannt und diesen zugeordnet werden.

Die von Unterkante der FIG 1 gesehen untere Schrittfrequenz umfasst zwei Schritte: P1 bis P2.

In einem Schritt P1 wird die vorgegebene Umgebung 5 mit einer Digitalkamera 4 (s. FIG 4) erfasst. Somit ist die Digitalkamera 4 derart angeordnet, dass die vorgegebene Umgebung 5 sich im Sichtfeld der Digitalkamera 4 befindet. Insbesondere kann sich das Sichtfeld der Digitalkamera 4 mit der Zeit verändern. Beispielsweise kann die Digitalkamera 4 an einem beweglichen Teil beispielsweise einer Kraneinrichtung befestigt werden, sodass sie die Umgebung 5 aus verschiedenen Perspektiven aufnehmen kann. Vorzugsweise handelt sich hierbei um eine 2D-Digitalkamera, die durch Erfassen der vorgegebenen Umgebung 2D-Bilddaten generiert. Vorzugsweise erfasst die Digitalkamera 4 die gleichen Objekte O, 6a bis 6d, O1, O2, O3 in der vorgegebenen Umgebung 5, die mit der Laservorrichtung 3 erfasst worden sind.

Die Koordinaten (X_{K}, Y_{K}) der Objekte O, 6a bis 6d, O1, O2, O3 in den 2D-Bilddaten sind in einem zweiten Koordinatensystem - in dem Koordinatensystem KKS, das auf die Digitalkamera 4 bezogen ist. Grundsätzlich unterscheidet sich dieses zweite Koordinatensystem KKS von dem ersten Koordinatensystem LKS, das auf die Laservorrichtung 3 bezogen ist, und die Relation zwischen dem ersten und zweiten Koordinatensystem LKS und KKS ist nicht bekannt, sodass die Koordinaten (X_{K}, Y_{K}) der Objekte O, 6a bis 6d, O1, O2, O3 in den 2D-Bilddaten den Koordinaten (X_{PW}, Y_{PW}, Z_{PW}) dieser Objekte O, 6a bis 6d, O1, O2, O3 in den 3D-Daten nicht entsprechen.

In einem Schritt P2 wird einer Strukturanalyse der Bilddaten vorgenommen. Dabei werden in den Daten bestimmte Strukturen, vorzugsweise Kanten und/oder Ecken 9 der in der Umgebung 5 befindlichen Objekte O, 6a bis 6d, O1, O2, O3 erkannt. Die Kanten-/Eckendetektion in den erfassten Bilddaten kann beispielsweise mittels des Canny-Algorithmus erfolgen. Dabei können beispielsweise Sobel- bzw. Canny-Filter verwendet werden, die die Kanten-/Ecken aus den Bilddaten extrahieren.

Es wird an dieser Stelle bemerkt, dass auch andere aus dem Stand der Technik bekannte Verfahren verwendet werden können, um Kanten und/oder Ecken 9 in Kamera- bzw. Laserdaten zu erkennen. Der Erfindung ist somit auf die oben genannten konkreten Schritte S1 bis S5 und P1, P2 nicht beschränkt.

In einem Schritt SP können die in den 3D-Daten erkannten Kanten und/oder Ecken 9 mit in den Bilddaten erkannten Kanten und/oder Ecken 9 gepaart bzw. verknüpft werden. Zunächst wird sowohl in einem Kamera-Kanten-Bild, welches als Ergebnis der Bilddatenverarbeitung entsteht, als auch in der Projektion des Krümmungsnetzes, welche sich als Ergebnis der Verarbeitung der 3D-Daten ergibt, ein Histogram of (oriented) Gradients (HOG) erzeugt. Anschließend werden die einzelnen Histogramme (jeweils aus den 3D-Daten und aus den Bilddaten) verglichen und die den entsprechenden Kanten und/oder Ecken 9 gehörenden Punkte aus den 3D-Daten (X_{PW}, Y_{PW}, Z_{PW}) und aus den Bilddaten (X_{K}, Y_{K}) paarweise miteinander verbunden. Dabei werden die bei der Verarbeitung der 3D-Daten berechneten Hüllkurven derart transformiert, beispielsweise durch Drehung, Translation, Skalierung und Abbildung über Kamera-Intrinsik (z.B. Brennweite f, die Eigenschaften der Linse IP image plane), dass die detektierten Kanten und/oder Ecken 9 in den Hüllkurven bestmöglich zu den in den Kamerabildern erkannten Kanten und/oder Ecken 9 passen. Um unterschiedlicher Skalierung der 3D-Daten und der Bilddaten Rechnung zu tragen, kann ein skalierungsinvariantes Merkmals-Mapping verwendet werden. Beispielsweise kann dabei eine Scale-Invariant-Feature-Transform (SIFT) verwendet werden. Anschließend wird über einen Optimierungs-Term die bestmögliche Abbildungs- matrix zwischen allen gefundenen Punkt-Paaren bestimmt. Die Abbildungsmatrix ist vorzugsweise eine Matrix aus der Klasse der Rigid-Transforms, die aus der Robotik bekannt sind. Vor der Durchführung der Berechnung einer optimalen Lösung (der optimalen Abbildungsmatrix), können falsche Verbindungspaare gefiltert werden. Dies kann die Robustheit des Verfahrens erhöhen. Beim Filtern kann beispielsweise direkt kritische Distanz als Maß verwendet werden: ist beispielsweise der Abstand zwischen einem abgebildeten 2D-Punkt und dem 3D-Punkt größer als ein vorgegebener Wert, wird das Verbindungspaar abgelehnt - die Punkte werden nicht verbunden. Dabei werden falsch detektierte Verbindungspaare gefiltert. Als Ergebnis der Optimierung erhält man eine Transformationsmatrix zwischen dem ersten und dem zweiten Koordinatensystem bzw. zwischen dem ersten und dem zweiten Sensorsystem. Diese Transformationsmatrix kann anschließend genutzt werden, um die Laser-Informationen in das Kamera-Bild zu transformieren und *vice versa.* Mit anderen Worten entspricht einem Punkt (X_{PW}, Y_{PW}, Z_{PW}) 3D-Daten (im ersten Koordinatensystem LKS) einem Punkt (X_{K}, Y_{K}) in den Bilddaten (im zweiten Koordinatensystem KKS).

Es wird an dieser Stelle bemerkt, dass auch andere mathematische Verfahren verwendet werden können, welche die aus den 2D Bilddaten extrahierten Merkmale (Kanten und/oder Ecken) mit den aus den 3D Laserdaten extrahierten Merkmalen (Kanten und/oder Ecken) verknüpfen können.

Indem die Kanten und/oder Ecken 9 in den 3D-Daten und in den Bilddaten gepaart wurden, wird die relative Lage zwischen dem Koordinatensystem LKS der Laservorrichtung 3 und dem weiteren Koordinatensystem KKS der Digitalkamera 4 bestimmt.

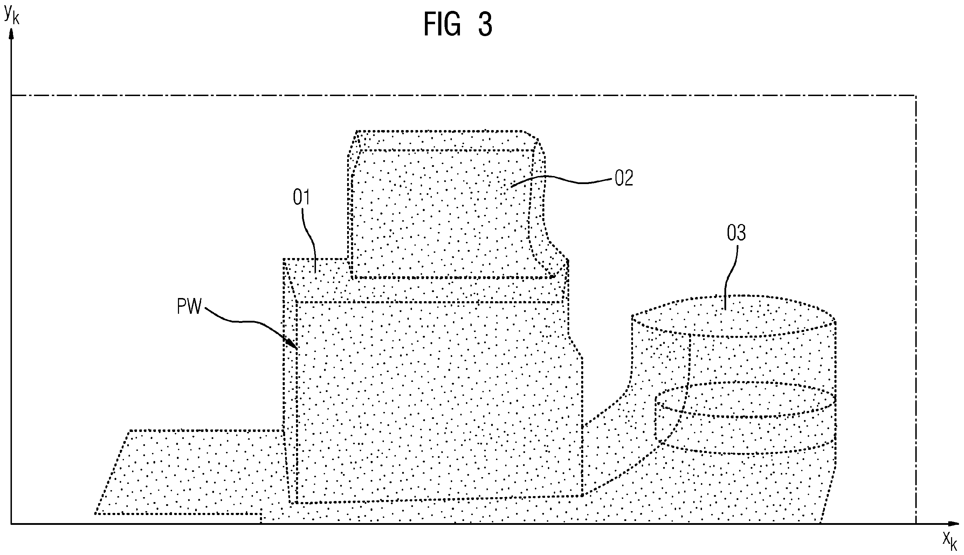

Dadurch können die einzelnen Objekte O, 6a bis 6d, O1, O2, O3 in der Umgebung 5 erkannt werden. Anschließend kann ein der erkannten Objekte ausgewählt werden und zumindest teilweise in einem der beiden Koordinatensysteme LKS, KKS in Form einer 3D-Punktwolke (Objekt-Punktewolke) PW repräsentiert werden. beispielsweise zeigt FIG 3 Punktewolken der Objekte O1, O2, O3 sowie des Bodens im kamerabezogenen Koordinatensystem X_{K}, Y_{K}.

Dies kann anhand der FIG 2 veranschaulicht werden. FIG 2 lässt ein erstes Koordinatensystem LKS, beispielsweise das Laser-Koordinatensystem und ein zweites Koordinatensystem KKS, beispielsweise das Kamera-Koordinatensystem erkennen. Die mit der ersten Sensorvorrichtung (mit der das erste Koordinatensystem LKS assoziiert ist) erfassten Punkte PW weisen Koordinaten (X_{PW}, Y_{PW}, Z_{PW}) auf. Die mit der zweiten Sensorvorrichtung (mit der das zweite Koordinatensystem KKS assoziiert ist) erfassten Objekte O weisen Koordinaten (X_{K}, Y_{K}) auf. FIG 2 lässt erkennen, dass es sich bei dem zweiten Sensorsystem um eine Digitalkamera mit einer Brennweite f und einer Bildebene IP handelt.

Der gebogene zweiseitige Pfeil zwischen dem ersten Koordinatensystem LKS und dem zweiten Koordinatensystem KKS weist auf das oben erörterte Verhältnis, das durch das Verknüpfen der Merkmale aus den 3D-Daten und den Bilddaten festgelegt werden kann.

FIG 3 veranschaulicht die Repräsentation (eines von der Digitalkamera 4 aus sichtbaren Teils) des ausgewählten Objekts O1 in Form der 3D-Punktwolke PW. Das Koordinatensystem KKS (X_{K}, Y_{K}), in dem das Objekt als die 3D-Punktwolke PW repräsentiert wird, ist auf die Digitalkamera 4 bezogen. Zu erkennen sind außerdem entsprechende von der Digitalkamera 4 aus sichtbare Teile von weiteren erkannten Objekte O2 und O3 sowie diesen Objekten korrespondierenden 3D-Punktwolken.

Es ist auch denkbar, eine Repräsentation in dem Koordinatensystem LKS der Laservorrichtung 3 zu wählen. In dieser werden die Teile der Objekte dargestellt, die von der Laservorrichtung 3 aus sichtbar sind.

Die 3D-Punktwolken können mit den Informationen aus den Bilddaten, z.B. Farbe, Bezeichnung des Objekts (Label) usw. angereichert werden.

FIG 4 zeigt schematisch ein System zum Greifen zumindest eines Objekts 6 in einer vorgegebenen Umgebung, die durch ein auf die Umgebung 5 bezogenes Koordinatensystem festgelegt ist.

Das System umfasst ein Sensorsystem 1. Die Sensorsystem 1 umfasst eine Recheneinrichtung 2, eine Laservorrichtung 3 und eine Digitalkamera bzw. ein Digitalkamera-System 4. Die Laservorrichtung 3 kann einen oder mehrere 3D-LiDAR-Sensoren umfassen.

Dabei können die Laservorrichtung 3 und das Digitalkamera-System 4 beispielsweise auf einem gemeinsamen Träger, insbesondere auf einer gemeinsamen Montageplatte montiert sein (hier nicht gezeigt).

Sowohl die Laservorrichtung 3 als auch die Digitalkamera 4 sind der Recheneinrichtung 2 zugeordnet und zum Übermitteln von erfassten Daten an die Recheneinrichtung 2 mit dieser verbunden. Die Recheneinrichtung 2 kann eingerichtet sein, die Laservorrichtung 3 und die 2D-Digitalkamera 4 zu steuern. Dabei kann die Recheneinrichtung 2 das Sichtfeld der Laservorrichtung 3 und/oder der Digitalkamera 4 verändern.

Die Laservorrichtung 3 und die Digitalkamera 4 sind derart ausgerichtet, dass sich die vorgegebene Umgebung 5 samt dem Objekt 6 in dem Sichtfeld der Laservorrichtung 3 und auch in dem Sichtfeld der Digitalkamera 4 befindet. Das Sichtfeld der Laservorrichtung 3 und das Sichtfeld der Digitalkamera 4 sind unterschiedlich.

Die Laservorrichtung 3 und die Digitalkamera 4 sind dazu eingerichtet, die vorgegebene Umgebung 5 (vorzugsweise aus unterschiedlichen Perspektiven) abzutasten, um die entsprechenden 3D-Daten und die entsprechenden Bilddaten zu erzeugen.

Die Laservorrichtung 3 und die Digitalkamera 4 sind dazu eingerichtet, die 3D-Daten und die Bilddaten an die Recheneinrichtung 2 zu übermitteln.

Die Recheneinrichtung 2 ist dazu eingerichtet, die Laservorrichtung 3 und die Digitalkamera 4, z.B. wie oben beschrieben, einzustellen, in dem sie die 3D-Daten und die Bilddaten vollautomatisch fusioniert. Beim Fusionieren extrahiert die Recheneinrichtung 2 sowohl aus den 3D-Daten, wobei die 3D-Daten einem Koordinatensystem LKS der Laservorrichtung 3 zugeordnet sind, als auch aus den Bilddaten, wobei die Bilddaten einem Koordinatensystem KKS der Digitalkamera 4 zugeordnet sind, Merkmale beispielsweise Kanten und/oder Ecken 9 zumindest eines Objekts 6a bis 6d und verknüpft die aus den 3D-Daten extrahierten Merkmale mit den aus den Bilddaten extrahierten Merkmalen. Dadurch bestimmt die Recheneinrichtung 2 eine relative Lage zwischen dem Koordinatensystem LKS der Laservorrichtung 3 und dem Koordinatensystem KKS der Digitalkamera 4.

Die Recheneinrichtung 2 ist dazu eingerichtet, die 3D-Daten und die Bilddaten anschließend zu verarbeiten, und dabei zumindest eines der Objekte 6a bis 6d zu erkennen, seine Position in zumindest einem der beiden Koordinatensysteme LKS oder KKS zu bestimmen, und zumindest ein (von der Laservorrichtung 3 und von dem Digitalkamera-System 4 aus sichtbarer) Teil des Objektes 6a bis 6d und in Form einer 3D-Punktwolke zu repräsentieren.

Des Weiteren ist der Recheneinrichtung 2 eine Greifeinrichtung 7 mit einem Greifarm 8 zugeordnet.

Die Recheneinrichtung 2 ist dazu eingerichtet, Daten, die zum Repräsentieren zumindest eines Teils des Objekts 6a bis 6d in Form einer 3D-Punktwolke in dem vorgebbaren Koordinatensystem, z.B. LKS oder KKS ermittelt wurden, der Greifeinrichtung 7 bereitzustellen. Dabei kann die Recheneinrichtung 2 die Daten an die Greifeinrichtung 7 übermitteln.

Die Greifeinrichtung 7 verwendet diese Daten, indem sie aus den Daten Steuerbefehle für den Greifarm 8 ableitet, wobei es z.B. Koordinaten des Objekts 6a bis 6d im LKS oder KKS in ein Koordinatensystem der Greifeinrichtung umrechnet, und den Greifarm 8 steuert, damit dieser eine Bewegung ausführt, bei der das Objekt 6a bis 6d gegriffen wird.

Die vorgestellte Greifeinrichtung 7 kann ein Teil einer Krananlage sein. Dabei können die Laservorrichtung 3 und/oder die Digitalkamera 4 an einem Kran der Krananlage montiert sein. Das Objekt 6a bis 6d kann beispielsweise ein Container, eine Palette mit Gütern, o. ä. sein.

Die Greifeinrichtung 7 kann auch als ein Robot mit einem Greifarm 8 ausgebildet sein.

Die Aufgabe dieser Beschreibung besteht lediglich darin, veranschaulichende Beispiele bereitzustellen und weitere Vorteile und Besonderheiten dieser Erfindung anzugeben. Somit kann sie nicht als Einschränkung des Anwendungsgebiets der Erfindung beziehungsweise der in den Ansprüchen beanspruchten Patentrechte interpretiert werden. Insbesondere können die im Zusammenhang mit den hier beschriebenen Verfahren offenbarte Merkmale sinnvollerweise zur Weiterbildung der hier beschriebenen Systeme eingesetzt werden und *vica versa.*

Beispielsweise können hier offenbarte Verfahren zum Kalibrieren verwenden werden. Insbesondere bei Krananlagen werden Kamera-Laser- bzw. Laser-Laser-Systeme unter Zuhilfenahme der sogenannten Kalibrierkörper kalibriert, die zur Bestimmung der relativen Lage zwischen den einzelnen Systemen eingesetzt werden. Die Notwendigkeit dieser Kalibrierkörper entfällt, wenn das hier offenbarte Verfahren verwendet wird.

## Patentansprüche

1. Computergestütztes Verfahren zum Einstellen einer Sensoreinrichtung zum Erfassen einer zumindest ein Objekt (6a bis 6f, O1, O2, O3) umfassenden Umgebung (5), wobei die Sensoreinrichtung eine erste Sensorvorrichtung (3) und eine zweite, von der ersten Sensorvorrichtung (3) getrennt ausgebildete und beabstandete Sensorvorrichtung (4) umfasst, wobei
- der Umgebung (5) korrespondierende 3D-Daten, die mit der ersten Sensorvorrichtung (3) aufgenommen worden sind, und der Umgebung (5) korrespondierende Bilddaten, die mit der zweiten Sensorvorrichtung (4) aufgenommen worden sind, bereitgestellt werden, wobei die 3D-Daten in einem mit der ersten Sensorvorrichtung (3) assoziierten Koordinatensystem (LKS) vorliegen und die Bilddaten in einem weiteren, mit der zweiten Sensorvorrichtung (4) assoziierten Koordinatensystem (KKS) vorliegen,
- die 3D-Daten und die Bilddaten fusioniert werden, wobei sowohl aus den 3D-Daten als auch aus den Bilddaten Merkmale (9) des zumindest einen Objekts (6a bis 6f, O1, O2, O3) extrahiert werden und die aus den 3D-Daten extrahierten Merkmale (9) mit den aus den Bilddaten extrahierten Merkmalen (9) verknüpft werden, wodurch eine relative Lage zwischen dem Koordinatensystem (LKS) und dem weiteren Koordinatensystem (KKS) bestimmt wird.

2. Verfahren nach Anspruch 1, wobei die 3D-Daten mit einer Laser-, Radar-, oder Ultraschallvorrichtung (3) gemessenen Messpunkte umfassen.

3. Verfahren nach Anspruch 1 oder 2, wobei die Bilddaten mit einer digitalen Kamera aufgenommenen Bilder, Bild- und/oder Videosequenzen umfassen.

4. Verfahren nach einem der Ansprüche 1 bis 3, wobei die Merkmale Kanten und/oder Ecken sind.

5. Computerprogramm umfassend Befehle, die beim Ausführen des Computerprogramms durch einen Computer, diesen dazu veranlassen, ein Verfahren nach einem der Ansprüche 1 bis 4 auszuführen.

6. Computerlesbares Medium umfassend Computerprogramm nach Anspruch 5.

7. Computergestütztes Verfahren zum Erfassen zumindest eines Objekts (6a bis 6f, O1, O2, O3) in einer Umgebung (5), wobei
- eine Sensoreinrichtung bereitgestellt wird, wobei die Sensoreinrichtung eine erste Sensorvorrichtung (3) und eine zweite, von der ersten Sensorvorrichtung (3) getrennt ausgebildete und beabstandete Sensorvorrichtung (4) umfasst,
- der Umgebung (5) korrespondierende 3D-Daten mit der ersten Sensorvorrichtung (3) aufgenommen werden, wobei die 3D-Daten in einem mit der ersten Sensorvorrichtung (3) assoziierten Koordinatensystem (LKS) vorliegen,
- der Umgebung (5) korrespondierende Bilddaten mit der zweiten Sensorvorrichtung (4) aufgenommen werden, wobei die Bilddaten in einem weiteren, mit der zweiten Sensorvorrichtung (4) assoziierten Koordinatensystem (KKS) vorliegen,
- die Sensoreinrichtung nach einem Verfahren nach einem der Ansprüche 1 bis 4 eingestellt wird, und anschließend
- die 3D-Daten und die Bilddaten derart verarbeitet werden, dass das zumindest eine Objekt (6a bis 6f, O1, O2, O3) erfasst und seine Position in zumindest einem der beiden Koordinatensysteme (LKS, KKS) bestimmt wird.

8. Verfahren nach Anspruch 7, wobei zumindest ein Teil des erfassten Objektes (6a bis 6f, O1, O2, O3) in Form einer 3D-Punktwolke repräsentiert wird.

9. Verfahren nach Anspruch 7 oder 8, wobei zunächst die Bilddaten aufgenommen werden, wobei anhand der Bilddaten ein Bereich der Umgebung (5) ausgewählt wird, wobei der Bereich kleiner als die Umgebung (5) ist, und das zumindest eine Objekt (6a bis 6f, O1, O2, O3) vorzugsweise begrenzend enthält, wobei die 3D-Daten ausschließlich in dem Bereich aufgenommen werden.

10. Sensorsystem zum Erfassen zumindest eines Objekts (6a bis 6f, O1, O2, O3) in einer Umgebung (5) umfassend
- eine Sensoreinrichtung, die eine erste Sensorvorrichtung (3) und eine zweite, von der ersten Sensorvorrichtung (3) getrennt ausgebildete und beabstandete Sensorvorrichtung (4) umfasst, und
- eine Recheneinrichtung (2), wobei die erste und die zweite Sensorvorrichtung der Recheneinrichtung (2) zugeordnet sind, wobei
die erste Sensorvorrichtung (3) dazu eingerichtet ist:
- die Umgebung (5) abzutasten und dabei der Umgebung (5) korrespondierenden 3D-Daten zu erfassen, wobei die 3D-Daten in einem mit der ersten Sensorvorrichtung (3) assoziierten Koordinatensystem (LKS) vorliegen;
- die erfassten 3D-Daten an die Recheneinrichtung (2) zu übermitteln, wobei
die zweite Sensorvorrichtung (4) dazu eingerichtet ist:
- der Umgebung (5) korrespondierende Bilddaten aufzunehmen, wobei die Bilddaten in einem weiteren, mit der zweiten Sensorvorrichtung (4) assoziierten Koordinatensystem (KKS) vorliegen;
- die Bilddaten an die Recheneinrichtung (2) zu übermitteln, wobei
die Recheneinrichtung (2) dazu eingerichtet ist:
- ein Computerprogramm nach Anspruch 5 auszuführen, um die Sensoreinrichtung einzustellen, und anschließend
- die 3D-Daten und die Bilddaten derart zu verarbeiten, dass das zumindest eine Objekt (6a bis 6f, O1, O2, O3) erfasst und seine Position in zumindest einem der beiden Koordinatensysteme (LKS, KKS) bestimmt wird.

11. Sensorsystem nach Anspruch 10, wobei die Recheneinrichtung (2) dazu eingerichtet ist, zumindest ein Teil des Objektes (6a bis 6f, O1, O2, O3) in Form einer 3D-Punktwolke zu repräsentieren.

12. Sensorsystem nach Anspruch 11, wobei die Recheneinrichtung (2) eine Anzeigeeinrichtung umfasst, die dazu eingerichtet ist, die 3D-Punktwolke zu visualisieren.

13. System zum Greifen zumindest eines aufhebbaren Objekts (6a bis 6d, O1, O2, O3) in einer Umgebung (5), wobei das System ein Sensorsystem (1) nach einem der Ansprüche 10 bis 12 und eine dem Sensorsystem (1) zugeordnete Greifeinrichtung (7, 8) umfasst, wobei das Sensorsystem (1) dazu eingerichtet ist, auf die Position des zumindest einen aufhebbaren Objekts (6a bis 6d, O1, O2, O3) in zumindest einem der beiden Koordinatensysteme (LKS, KKS) bezogene Daten der Greifeinrichtung (7, 8) bereitzustellen, wobei die Greifeinrichtung (7, 8) dazu eingerichtet ist, aus den Daten Steuerbefehle abzuleiten und basierend auf den Steuerbefehlen eine Bewegung auszuführen, bei der das zumindest eine aufhebbare Objekt (6a bis 6d, O1, O2, O3) gegriffen wird.

14. Digitaler Zwilling zum Modellieren des Greifens des zumindest einen aufhebbaren Objekts (6a bis 6d, O1, O2, O3) in der Umgebung (5) umfassend ein digitalisiertes Abbild eines Systems nach Anspruch 13.

15. Digitaler Zwilling nach Anspruch 14, der eine Schnittstelle aufweist, über die bei der Modellierung ausgeführte Steuerbefehle unmittelbar an die Greifeinrichtung (7, 8) des Systems übermittelbar sind.
